# EUROPEAN PATENT APPLICATION

(11) **EP 4 778 961 A1**
(43) Date of publication of application: **22.07.2026**
(21) Application number: 24865003.8
(22) Date of filing: 27.05.2024
(51) Int. Cl.: C08J 5/06

(54) **COMPOSITE MATERIAL AND MOLDED ARTICLE**

(30) Priority: 13.09.2023 JP 2023148330
(71) Applicant: MITSUBISHI GAS CHEMICAL COMPANY, INC., Chiyoda-ku Tokyo 100-8324 (JP)
(72) Inventor: ITO, Keisuke, Hiratsuka-shi, Kanagawa 254-0016 (JP); AYUBA, Shinichi, Hiratsuka-shi, Kanagawa 254-0016 (JP)
(74) Representative: Vossius & Partner Patentanwälte Rechtsanwälte mbB
(86) International application number: PCT/JP2024/019374
(87) International publication number: WO 2025/057495

(57) **Abstract**

Provide is a composite material and a molded article formed from the composite material. The composite material uses a reinforcing fiber having a resin present on the surface, and the interfacial shear strength between the thermoplastic resin and the reinforcing fiber is high. The resulting molded article has high strength. A composite material including: a xylylenediamine-based polyamide resin including a diamine structural unit and a dicarboxylic acid structural unit, 70 mol% or more of the diamine structural unit being derived from xylylenediamine; and a reinforcing fiber including a thermosetting resin on a surface thereof, in which the reinforcing fiber includes the thermosetting resin in a proportion of more than 1.5 mass% and 30 mass% or less.

## Description

### Technical Field

The present invention relates to a composite material and a molded article.

### Background Art

As a lightweight and high-strength structural member for automobiles and electrical equipment, a variety of fiber-reinforced resin composite materials have been proposed. In general, a structural member used for industrial use is required to have a light weight and high mechanical properties. In many cases, such a structural member in the related art uses a metal material; however, use of a fiber-reinforced resin composite material that has a lighter weight and a higher strength compared to those of metal materials has been considered in recent years. Various resins can be used as a matrix resin of the fiber-reinforced resin composite material; however, a CFRP (CFRTP) using a thermoplastic resin with a short molding cycle compared to that of a thermosetting resin is industrially useful.

Examples of the fiber-reinforced resin composite material include those described in Patent Document 1.

### Citation List

### Patent Document

Patent Document 1: JP 2021-020331 A

### Summary of Invention

### Technical Problem

Meanwhile, in recent years, from the viewpoint of environmental load, use of recycled reinforcing fibers has been considered. However, for a molded article formed by using a composite material using a thermoplastic resin and recycled reinforcing fibers, interfacial shear strength between the thermoplastic resin and the reinforcing fibers tends to be small. Furthermore, mechanical strength of the resulting molded article also tends to be low. This is because a surface treatment agent, which is usually applied to surfaces of reinforcing fibers, is not present on surfaces of the recycled reinforcing fibers and, instead, a resin originated from a recycled material remains.

The present invention is to solve the problems described above, and an object of the present invention is to provide a composite material and a molded article formed from the composite material. The composite material uses a reinforcing fiber, like a recycled reinforcing fiber, having a resin present on the surface, and the interfacial shear strength between the thermoplastic resin and the reinforcing fiber is high. The resulting molded article has high strength.

### Solution to Problem

As a result of studies conducted in response to the issue described above, the present inventors have found that the above-described issue can be solved by a composite material containing a xylylenediamine-based polyamide resin as a thermoplastic resin, and reinforcing fibers containing a predetermined amount of a thermosetting resin on surfaces.

Specifically, the above-described issue have been solved by the following means.
<1> A composite material including:
   a xylylenediamine-based polyamide resin including a diamine structural unit and a dicarboxylic acid structural unit, 70 mol% or more of the diamine structural unit being derived from xylylenediamine; and
   a reinforcing fiber including a thermosetting resin on a surface thereof,
   where the reinforcing fiber includes the thermosetting resin in a proportion of more than 1.5 mass% and 30 mass% or less.
<2> The composite material according to <1>, where the reinforcing fiber is a recycled reinforcing fiber.
<3> The composite material according to <1>, where the reinforcing fiber is a recycled carbon fiber.
<4> The composite material according to any one of <1> to <3>, where 50 mol% or more of the dicarboxylic acid structural unit in the xylylenediamine-based polyamide resin is a structural unit derived from an α,ω-linear aliphatic dicarboxylic acid having from 4 to 20 carbon atoms.
<5> The composite material according to any one of <1> to <4>, where the reinforcing fiber is included in an amount of from 100 to 250 parts by mass with respect to 100 parts by mass of the xylylenediamine-based polyamide resin.
<6> The composite material according to any one of <1> to <5>, where the reinforcing fiber is a continuous reinforcing fiber.
<7> The composite material according to any one of <1> to <6>, where 90 mass% or more of a resin component included in the composite material is the xylylenediamine-based polyamide resin, and the thermosetting resin included in the reinforcing fiber.
<8> The composite material according to any one of <1> to <7>, where
   the reinforcing fiber is a recycled carbon fiber,
   50 mol% or more of the dicarboxylic acid structural unit in the xylylenediamine-based polyamide resin is a structural unit derived from an α,ω-linear aliphatic dicarboxylic acid having from 4 to 20 carbon atoms,
   the reinforcing fiber is included in an amount of from 100 to 250 parts by mass with respect to 100 parts by mass of the xylylenediamine-based polyamide resin,
   the reinforcing fiber is a continuous reinforcing fiber, and
   90 mass% or more of a resin component included in the composite material is the xylylenediamine-based polyamide resin, and the thermosetting resin included in the reinforcing fiber.
<9> The composite material according to any one of <1> to <8>, where the reinforcing fiber is a woven fabric.
<10> The composite material according to any one of <1> to <8>, where the composite material is a pellet.
<11> A molded article formed from the composite material described in any one of <1> to <10>.

### Advantageous Effects of Invention

The present invention provides a composite material and a molded article formed from the composite material. The composite material uses a reinforcing fiber having a resin present on the surface, and the interfacial shear strength between the thermoplastic resin and the reinforcing fiber is high. The resulting molded article has high strength.

### Description of Embodiments

Hereinafter, modes for carrying out the present invention (hereinafter, simply referred to as "the present embodiment") will be described in detail. The present embodiments described below are examples for describing the present invention, and the present invention is not limited only to the present embodiments.

In the present description, "from ... to ..." or "of ... to ..." is used to mean that the numerical values described before and after "to" are included as the lower limit value and the upper limit value, respectively.

In the present description, various physical property values and characteristic values are those at 23°C unless otherwise noted.

In the present description, weight average molecular weight and number average molecular weight are values calibrated with polystyrene measured by gel permeation chromatography (GPC) unless otherwise noted.

In the present description, unless otherwise specified, the weight average molecular weight and the number average molecular weight can be measured according to the description in paragraph 0047 of JP 2018-165298 A, the contents of which are incorporated herein.

When the measurement methods or the like described in the standards set forth in the present description differ depending on the year, the measurement methods or the like are based on the standards as of January 1, 2023, unless otherwise noted.

The composite material of the present embodiment is characterized by containing a xylylenediamine-based polyamide resin containing a diamine structural unit and a dicarboxylic acid structural unit, 70 mol% or more of the diamine structural unit being derived from xylylenediamine, and a reinforcing fiber containing a thermosetting resin on a surface thereof; the reinforcing fiber containing the thermosetting resin in a proportion of more than 1.5 mass% and 30 mass% or less. Such a configuration makes it possible to provide a composite material that has high interfacial shear strength between the thermoplastic resin and the reinforcing fiber and that provides a molded article having high strength.

In particular, even when a recycled material of a woven fabric is used as a reinforcing fiber, because the reinforcing fiber is protected by the thermosetting resin, high interfacial shear strength between the thermoplastic resin and the reinforcing fiber is achieved, and a molded article having excellent mechanical strength is obtained.

Furthermore, even when a surface treatment agent (including those called as a binder, a size agent, a sizing agent, and the like) is not present in between the xylylenediamine-based polyamide resin and the reinforcing fiber, high interfacial shear strength between the thermoplastic resin and the reinforcing fiber is achieved, and a molded article having excellent mechanical strength is obtained.

### Xylylenediamine-Based Polyamide Resin

The composite material of the present embodiment contains a xylylenediamine-based polyamide resin.

The xylylenediamine-based polyamide resin of the present embodiment is a polyamide resin containing a diamine structural unit and a dicarboxylic acid structural unit, and 70 mol% or more of the diamine structural unit is a xylylenediamine-based polyamide resin derived from xylylenediamine.

In the xylylenediamine-based polyamide resin, 50 mol% or more of the dicarboxylic acid structural unit is preferably derived from an α,ω-linear aliphatic dicarboxylic acid having from 4 to 20 carbon atoms. In the composite material of the present embodiment, the strength and chemical resistance inherent in the xylylenediamine-based polyamide resin can be exhibited.

In the xylylenediamine-based polyamide resin, preferably 75 mol% or more, more preferably 80 mol% or more, even more preferably 85 mol% or more, yet even more preferably 90 mol% or more, yet even more preferably 95 mol% or more, and particularly preferably 99 mol% or more, of the diamine structural unit is derived from a xylylenediamine (preferably p-xylylenediamine and/or m-xylylenediamine, and more preferably m-xylylenediamine). Furthermore, in the xylylenediamine-based polyamide resin, more preferably 60 mol% or more, even more preferably 70 mol% or more, yet even more preferably 80 mol% or more, yet even more preferably 90 mol% or more, yet even more preferably 95 mol% or more, and particularly preferably 99 mol% or more, of the dicarboxylic acid structural unit is derived from an α,ω-linear aliphatic dicarboxylic acid having from 4 to 20 carbon atoms.

In the present embodiment, in the xylylenediamine, the molar ratio of m-xylylenediamine to p-xylylenediamine, m-xylylenediamine/p-xylylenediamine, is preferably from 00 to 100/from 100 to 0, more preferably from 10 to 100/from 90 to 0, even more preferably from 20 to 100/from 80 to 0, yet even more preferably from 50 to 90/from 50 to 10, and yet even more preferably from 60 to 80/from 40 to 20, when the total of m-xylylenediamine and p-xylylenediamine is 100 mol. When the p-xylylenediamine is contained, the melting point of the polyamide resin can be made high.

Examples of the diamine that can be used as a raw material diamine component of the xylylenediamine-based polyamide resin, other than m-xylylenediamine or p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, or bis(aminomethyl)tricyclodecane; and a diamine having an aromatic ring, such as bis(4-aminophenyl)ether, p-phenylenediamine, or bis(aminomethyl)naphthalene. One of these diamines, or a mixture of two or more of these may be used.

As described above, in the xylylenediamine-based polyamide resin, 50 mol% or more of the dicarboxylic acid structural unit is preferably derived from an α,ω-linear aliphatic dicarboxylic acid having from 4 to 20 carbon atoms. The number of carbon atoms of the α,ω-linear aliphatic dicarboxylic acid having from 4 to 20 carbon atoms is preferably 6 or more, and preferably 18 or less, more preferably 16 or less, even more preferably 14 or less, yet even more preferably 13 or less, and yet even more preferably 12 or less.

Examples of the α,ω-linear aliphatic dicarboxylic acid having from 4 to 20 carbon atoms that is preferably used as the raw material dicarboxylic acid component of the xylylenediamine-based polyamide resin include an aliphatic dicarboxylic acid, such as succinic acid, glutaric acid, pimelic acid, suberic acid, azelaic acid, adipic acid, sebacic acid, undecanedioic acid, and dodecanedioic acid. One or a mixture of two or more of these may be used. Among these, at least one selected from adipic acid, sebacic acid, or dodecanedioic acid is more preferred, and sebacic acid is even more preferred.

Examples of a preferred embodiment of the xylylenediamine-based polyamide resin in the present embodiment include a xylylenediamine-based polyamide resin in which 50 mol% or more (preferably 70 mol% or more, more preferably 90 mol% or more) of the dicarboxylic acid structural unit is derived from at least one of adipic acid, sebacic acid, or dodecanedioic acid (preferably sebacic acid).

Examples of the dicarboxylic acid component other than the α,ω-linear aliphatic dicarboxylic acid having from 4 to 20 carbon atoms described above include a phthalic acid compound, such as isophthalic acid, terephthalic acid, or orthophthalic acid; and an isomer of naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, or 2,7-naphthalenedicarboxylic acid. One of these dicarboxylic acid components, or a mixture of two or more of these may be used.

The xylylenediamine-based polyamide resin contains a diamine structural unit and a dicarboxylic acid structural unit as main components, but it does not entirely exclude structural units other than these. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. Here, the main component means a component having the largest total number of the diamine structural units and the dicarboxylic acid structural units among all the structural units constituting the xylylenediamine-based polyamide resin. In the present embodiment, the total of the diamine structural units and the dicarboxylic acid structural units in the xylylenediamine-based polyamide resin preferably accounts for 90 mass% or more, more preferably 95 mass% or more, even more preferably 97 mass% or more, yet even more preferably 99 mass% or more, of all the structural units.

The thermoplastic resin (particularly, polyamide resin and xylylenediamine-based polyamide resin) and a thermoplastic resin produced by using a recycled resin or a biomass raw material (biomass thermoplastic resin) are also preferably used. Use of a biomass thermoplastic resin can reduce environmental load.

For example, in the xylylenediamine-based polyamide resin, a bioadipic acid can be used as a biomass raw material. Adipic acid that has been mass balance certified (ISCC PLUS) can also be used. The mass balance certification means that degrees of usage of reusable raw materials and raw biomaterials for each factory or production facility and degrees of production and shipment of products are quantified and certified together with quality.

The melting point of the xylylenediamine-based polyamide resin is preferably 150°C or higher, more preferably 180°C or higher, even more preferably 200°C or higher, and yet even more preferably 205°C or higher. The melting point of the xylylenediamine-based polyamide resin is preferably 350°C or lower, more preferably 330°C or lower, even more preferably 300°C or lower, yet even more preferably 280°C or lower, yet even more preferably 260°C or lower, and yet even more preferably 250°C or lower.

In a case where two or more xylylenediamine-based polyamide resins are contained in the composite material of the present embodiment, a melting point of the xylylenediamine-based polyamide resins is taken as a melting point of a resin having the highest melting point.

The melting point is a value measured by differential scanning calorimetry (DSC) in accordance with ISO11357. Specifically, the measurement can be performed according to the description in paragraph 0036 of WO 2016/084475, the contents of which are incorporated herein by reference.

The lower limit of the number average molecular weight (Mn) of the xylylenediamine-based polyamide resin is preferably 6000 or more, more preferably 8000 or more, and even more preferably 10000 or more, and is preferably 10000 or less, and more preferably 50000 or less. In a case where two or more xylylenediamine-based polyamide resins used in the present embodiment are contained, the number average molecular weight of the mixture is used.

In the measurement of the number average molecular weight (Mn) of the xylylenediamine-based polyamide resin, the number average molecular weight can be determined by gel permeation chromatography (GPC) analysis based on calibration with standard polymethylmethacrylate (PMMA). Two columns, in which a styrene-based polymer is charged as a filler, are used as columns. Hexafluoroisopropanol (HFIP) having a sodium trifluoroacetate concentration of 2 mmol/L is used as a solvent. The measurement is performed at a resin concentration of 0.02 mass%, a column temperature of 40°C, a flow rate of 0.3 mL/min, using a refractive index detector (RI). The calibration curve is measured by dissolving 6 levels of PMMA in HFIP.

The content proportion of the xylylenediamine-based polyamide resin in the composite material of the present embodiment is preferably 25 mass% or more, more preferably 30 mass% or more, even more preferably 35 mass% or more, and yet even more preferably 38 mass% or more, in 100 mass% of the composite material. By setting the content proportion to not less than the lower limit value, the amount of the xylylenediamine-based polyamide resin increases, unimpregnated regions in the composite material decrease, and thus the mechanical strength of the resulting molded article tends to be further improved. Furthermore, the proportion of the xylylenediamine-based polyamide resin in the composite material of the present embodiment is preferably 70 mass% or less, more preferably 65 mass% or less, even more preferably 60 mass% or less, yet even more preferably 55 mass% or less, yet even more preferably 50 mass% or less, and yet even more preferably 45 mass% or less, in 100 mass% of the composite material. By setting the proportion to not higher than the upper limit value, the proportion of the reinforcing fibers in the composite material can be increased, and thus mechanical properties of the resulting molded article can be further improved.

The composite material of the present embodiment may contain only one type of xylylenediamine-based polyamide resin or may contain two or more types thereof. When two or more types are contained, the total amount is preferably within the range described above.

Resin additives, such as an antioxidant, a stabilizer including a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, an anticolorant, an anti-gelling agent, a colorant, and a release agent, can be added to the xylylenediamine-based polyamide resin used in the present embodiment in a range that does not impair the object and effect of the present invention. For details of these, reference can be made to the descriptions in paragraphs 0130 to 0155 of JP 4894982 B and the descriptions in paragraphs 0047 to 0103 of WO 2021/241471, the contents of which are incorporated herein by reference.

Typically, the content of the resin additive in the xylylenediamine-based polyamide resin is from 0 to 5 mass%, and preferably from 0 to 3 mass%, and may be from 0 to 1 mass%.

In addition to the xylylenediamine-based polyamide resin, the composite material of the present embodiment may contain an additional polyamide resin other than the xylylenediamine-based polyamide resin and a thermoplastic resin other than the polyamide resin, or may contain none of these.

The additional polyamide resin may be an aliphatic polyamide resin or an aromatic polyamide resin.

The aliphatic polyamide resin means a polyamide resin in which the amount of an aromatic monomer-derived structural unit is less than 20 mol% of all the structural units constituting the polyamide resin. Examples of the aliphatic polyamide resin include polyamide 4, polyamide 46, polyamide 6, polyamide 66, polyamide 666, polyamide 610, polyamide 11, polyamide 116, polyamide 12, and polyamide 612.

The aromatic polyamide resin refers to an aromatic polyamide resin containing a diamine structural unit and a dicarboxylic acid structural unit, in which from 20 to 80 mol% (preferably from 30 to 80 mol%, and more preferably from 40 to 70 mol%) of all the structural units of the diamine structural unit and the dicarboxylic acid structural unit are structural units each containing an aromatic ring. The use of such a semi-aromatic polyamide resin can increase mechanical strength of the resulting molded article. Examples of the semi-aromatic polyamide resin include polyhexamethylene terephthalamide (polyamide 6T), polyhexamethylene isophthalamide (polyamide 6I), polyamide 66/6T, polyamide 9T, polyamide 9MT, polyamide 10T, and polyamide 6I/6T.

In a case where the composite material of the present embodiment contains an additional polyamide resin, the content thereof is preferably 1 part by mass or more, and preferably 10 parts by mass or less, and more preferably 5 parts by mass or less, with respect to 100 parts by mass of the xylylenediamine-based polyamide resin contained in the composite material.

In a case where the composite material of the present embodiment contains a thermoplastic resin other than the polyamide resin, examples of the thermoplastic resin include a polyolefin resin, such as a polyethylene or a polypropylene; a polyester resin, such as a poly(ethylene terephthalate) or a poly(butylene terephthalate); a poly(oxymethylene) resin; a poly(ether ketone) resin, such as a poly(ether ketone), a poly(ether ether ketone), a poly(ether ketone ketone), or a poly(ether ether ketone ketone); a poly(ether sulfone) resin; a poly(ether sulfide) resin; a thermoplastic polyimide resin, such as a thermoplastic poly(ether imide), a thermoplastic poly(amide imide), a wholly aromatic polyimide, or a semi-aromatic polyimide.

In a case where the composite material of the present embodiment contains a thermoplastic resin other than the polyamide resin, the content thereof is preferably 1 part by mass or more, and preferably 20 parts by mass or less, and more preferably 10 parts by mass or less, and may be 5 parts by mass or less, with respect to 100 parts by mass of the xylylenediamine-based polyamide resin contained in the composite material.

### Reinforcing Fiber Having Thermosetting Resin on Surface

In the composite material of the present embodiment, a reinforcing fiber having a thermosetting resin on a surface of the reinforcing fiber is contained. By allowing the reinforcing fiber to be contained, high mechanical strength of the resulting molded article can be achieved.

In the composite material of the present embodiment, the reinforcing fiber having the thermosetting resin on the surface contains a reinforcing fiber itself and a thermosetting resin contained on the surface of the reinforcing fiber. Typically, the total amount of the reinforcing fiber itself and the thermosetting resin accounts for 95 mass% (preferably 99 mass% or more and 100 mass% or less) of the entire reinforcing fiber.

The reinforcing fiber itself in the present embodiment may be a long fiber (continuous reinforcing fiber) or a short fiber. The long fiber refers to a fiber having a number average fiber length of 6 mm or more and is preferably a reinforcing fiber having a number average fiber length of more than 12 mm, more preferably a reinforcing fiber having a number average fiber length of more than 30 mm, and even more preferably a reinforcing fiber having a number average fiber length of more than 10 cm, and may be a reinforcing fiber having a number average fiber length of 1 m or more. The upper limit thereof may be 10000 m or less. The short fiber has a number average fiber length of less than 6 mm.

Examples of the material of the reinforcing fiber itself include inorganic fibers, such as glass fibers, carbon fibers, metal fibers, boron fibers, basalt fibers, and ceramic fibers; and organic fibers, such as aramid fibers, polyoxymethylene fibers, aromatic polyamide fibers, poly(p-phenylene benzobisoxazole) fibers, and ultra-high molecular weight polyethylene fibers. Among these, inorganic fibers are preferable from the viewpoint of achieving high strength, and at least one type selected from the group consisting of glass fibers, carbon fibers, and basalt fibers is more preferable due to lightweight, high strength and a high elastic modulus of the fibers, and carbon fibers are even more preferable.

Examples of the carbon fibers include polyacrylonitrile-based carbon fibers and pitch-based carbon fibers. In addition, carbon fibers made from plant-based raw materials such as lignin and cellulose can also be used.

A first embodiment of the reinforcing fibers in the present embodiment includes a regular array of reinforcing fibers (preferably continuous reinforcing fibers). Regular array also includes continuous reinforcing fibers being arranged in parallel in one direction and includes a woven fabric of fibers, knitting of fibers, and the like. Furthermore, regular in the present invention of course includes, in addition to regularity in a geometrical sense, an ordinary margin of error in the technical field of the present invention. Examples of a case where a regular array is not formed include a nonwoven fabric. The first embodiment of the reinforcing fibers is preferably a woven fabric. As the woven fabric, known fabric such as twill weave, plain weave, or sateen weave fabric can be widely employed, and plain weave fabric is preferred.

A second embodiment of the reinforcing fibers in the present embodiment is short fibers.

The reinforcing fibers used in the present embodiment include a thermosetting resin on the surfaces. Examples of the thermosetting resin include an epoxy resin, an oxetane resin, a phenolic resin, a polyurethane resin, a melamine resin, a maleimide resin, and a cyanate resin, and an epoxy resin is preferred.

In the present embodiment, the reinforcing fiber having the thermosetting resin on the surface is preferably a recycled reinforcing fiber and is preferably a recycled carbon fiber. A recycled reinforcing fiber derived from a fiber-reinforced epoxy resin is particularly preferred.

In particular, the proportion of the thermosetting resin in the reinforcing fiber is more than 1.5 mass%, preferably 2 mass% or more, more preferably 3 mass% or more, even more preferably 4 mass% or more, yet even more preferably 5 mass% or more, and yet even more preferably 7 mass% or more, in 100 mass% of the reinforcing fiber. Furthermore, the proportion of the thermosetting resin in the reinforcing fiber is 30 mass% or less, more preferably 25 mass% or less, even more preferably 18 mass% or less, yet even more preferably 15 mass% or less, yet even more preferably 14 mass% or less, and yet even more preferably 13 mass% or less, and may be 10 mass% or less, in 100 mass% of the reinforcing fiber. By setting the proportion to not less than the lower limit value, damage of the reinforcing fiber in the resulting molded article can be reduced, and thus mechanical strength of the resulting molded article can be further improved. Furthermore, by setting the proportion to not higher than the upper limit value, the interfacial shear strength between the xylylenediamine-based polyamide resin and the reinforcing fiber can be made high in the resulting composite material.

The reinforcing fiber may use only one type of thermosetting resin or may use two or more types of thermosetting resins. When two or more types are used, the total amount is preferably within the range described above.

A part of the thermosetting resin contained in the reinforcing fiber may be a carbide. In particular, in a case where the reinforcing fiber is a recycled material, the proportion of a carbide tends to be high. The content of the thermosetting resin in the reinforcing fiber used in the present embodiment means an amount of thermosetting resin remained without being a carbide after carbonization.

The content of the reinforcing fibers in the composite material in the present embodiment is preferably 100 parts by mass or more, more preferably 120 parts by mass or more, even more preferably 130 parts by mass or more, and yet even more preferably 140 parts by mass or more, and may be 145 parts by mass or more, with respect to 100 parts by mass of the xylylenediamine-based polyamide resin. By setting the content to not less than the lower limit value, the proportion of the reinforcing fibers in the composite material can be increased, and thus mechanical properties of the resulting molded article can be further improved. Furthermore, the content of the reinforcing fibers in the composite material of the present embodiment is preferably 250 parts by mass or less, more preferably 200 parts by mass or less, and even more preferably 180 parts by mass or less, with respect to 100 parts by mass of the xylylenediamine-based polyamide resin. By setting the content to not higher than the upper limit value, the amount of the xylylenediamine-based polyamide resin can be increased, unimpregnated regions in the composite material decrease, and thus the mechanical strength of the resulting molded article tends to be further improved.

The composite material of the present embodiment may contain only one type of reinforcing fibers, or may contain two or more types of reinforcing fibers. When two or more types are contained, the total amount is preferably within the range described above.

In the composite material of the present embodiment, the xylylenediamine-based polyamide resin and the thermosetting resin contained in the reinforcing fibers account for preferably 90 mass% or more, more preferably 95 mass% or more, even more preferably 98 mass% or more, and yet even more preferably 99 mass% or more, of resin components contained in the composite material. The upper limit is 100 mass%.

Note that the resin components contained in the composite material means components other than the reinforcing fibers (excluding the thermosetting resin part) and other reinforcing fillers and means the thermoplastic resin and a resin additive.

In the composite material of the present embodiment, the total amount of the xylylenediamine-based polyamide resin and the reinforcing fibers (including the thermosetting resin part) accounts for preferably 90 mass% or more, more preferably 93 mass% or more, even more preferably 95 mass% or more, and yet even more preferably 97 mass% or more, of 100 mass% of the composite material. The upper limit may be 100 mass%.

### Form and Production Method of Composite Material

The composite material of the present embodiment is preferably combined by heating the xylylenediamine-based polyamide resin and the reinforcing fibers having the thermosetting resin on the surfaces. Due to the heating, high interfacial shear strength between the xylylenediamine-based polyamide resin and the reinforcing fibers can be achieved without sandwiching a surface treatment agent, a binder, or the like.

An example of a first embodiment of the composite material of the present embodiment is a composite material produced by hot-pressing a xylylenediamine-based polyamide resin film and woven fabric of reinforcing fibers having a thermosetting resin on surfaces. In this case, the xylylenediamine-based polyamide resin and the reinforcing fibers themselves are bonded by sandwiching the thermosetting resin or bonded directly. An example of the composite material of the first embodiment is a prepreg. The composite material of the first embodiment is preferably film-shaped. The film shape herein includes a wide variety of plate-shaped molded bodies such as sheet-shaped or tape-shaped molded bodies.

In a case where the composite material of the present embodiment is in a film form, the thickness thereof is preferably 50 µm or more, and more preferably 100 µm or more. By setting the thickness to not less than the lower limit value, creases are less likely to be formed when multiple layers of xylylenediamine-based polyamide resin films and woven fabric of reinforcing fibers having a thermosetting resin on surfaces are laminated, and resin unevenness in the resulting composite material tends be effectively suppressed. Furthermore, the thickness of the film-shaped composite material is preferably 300 µm or less, and more preferably 200 µm or less. By setting the thickness to not higher than the upper limit value, impregnation time of the xylylenediamine-based polyamide resin tends to be shortened, and resin deterioration due to heating tends to be effectively suppressed.

Furthermore, the woven fabric of the reinforcing fibers having the thermosetting resin on the surfaces is preferably a recycled material of a prepreg containing the thermosetting resin.

An example of a second embodiment of the composite material of the present embodiment is a composite material produced by melt-kneading a xylylenediamine-based polyamide resin film and reinforcing fibers having a thermosetting resin on surfaces. In this case, by the melt kneading, high interfacial shear strength between the xylylenediamine-based polyamide resin and the reinforcing fibers can be achieved. An example of the composite material of the second embodiment is a pellet.

Furthermore, as the reinforcing fibers having the thermosetting resin on the surfaces used in the second embodiment, a wide variety of molded articles of fiber-reinforced thermosetting resins can be used.

The molded article of the present embodiment is made of the composite material of the present embodiment.

The method for producing the molded article of the present embodiment is not particularly limited.

For example, formation can be performed by hot pressing, pultrusion, ultrasonic molding, laser forming, metal molding, or internal pressure forming.

As another example, a molded article may be made from pellets by using various molding methods.

The method for molding the molded article using the resin composition or the pellets is not particularly limited, and known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, and a pressure molding method.

The shape of the molded article of the present embodiment is not particularly limited, and can be selected as appropriate according to the application and purpose of the molded article. Examples of the shape thereof include board-shaped, plate-shaped, rod-shaped, sheet-shaped, film-shaped, cylindrical, annular, circular, oval, gear-shaped, polygonal, irregular, hollow, frame-shaped, box-shaped, and panel-shaped molded articles.

The fields of application of the molded articles of the present embodiment are not particularly limited, and the molded articles can be widely used in applications such as transport machine components such as automobile components, general machine components, precision machine components, electronic and electrical equipment components, OA equipment components, building materials and building-related components, medical devices, leisure sporting goods, playground equipment, medical products, household goods such as food packaging films, and defense and aerospace products.

### Examples

Hereinafter, the present invention will be described more specifically with reference to Examples. Materials, amounts used, proportions, processing details, processing procedures, and the like described in the following examples can be appropriately changed as long as they do not depart from the spirit of the present invention. Thus, the scope of the present invention is not limited to the specific examples described below.

When it is difficult to obtain a measuring instrument or the like used in Examples because of discontinuation or the like, another instrument with equivalent performance can be used for the measurements.

### 1. Raw Material

CF: Plain weave fabric of recycled carbon fibers; type of curable resin: epoxy resin. The proportion of thermosetting resin remained without being a carbide after carbonization was 10 mass%.

The used recycled carbon fibers were all subjected to carbonization at 500°C for 1 hour.

MPXD10: Polyamide resin synthesized in Synthesis Example 1.

### Synthesis Example 1: Synthesis of MPXD10

Sebacic acid (available from CASDA) was placed in a jacketed reactor equipped with a stirrer, a partial condenser, a cooler, a thermometer, a dripping tank, and a nitrogen gas inlet tube, sufficiently purged with nitrogen, heated and melted at 170°C, and then the temperature was raised to 240°C, while the contents was stirred and a mixed amine of m-xylylenediamine and p-xylylenediamine (70:30) (MPXDA available from Mitsubishi Gas Chemical Company, Inc.) was gradually added dropwise until the molar ratio of the mixed amine to sebacic acid reached 1:1. After the completion of dropwise addition, the temperature was increased to 260°C, and the reaction was continued for 20 minutes. Thereafter, the internal pressure of the reaction system was continuously reduced to 0.08 MPa, and the reaction was continued. After completion of the reaction, nitrogen gas was used to apply a pressure of 0.2 MPa inside the reactor, and the polymer was taken out as a strand from a nozzle at a lower part of the polymerization tank and cooled with water, and the strand was then pelletized with a pelletizer to obtain a pellet.

### 2. Examples 1 and 2 and Comparative Examples 1 and 2

### Production of Resin Film

The polyamide resin was dried using a vacuum dryer, and then melt-extruded in a single screw extruder having a screw with a diameter of 30 mm, and extrusion molded through a 500 mm wide T die, after which the extrusion molded product was compressed at a roller pressure of 0.4 MPa and a roller temperature of 70°C using a pair of stainless steel rollers, and thus a 100 µm film was formed.

### Production of Molded Article

Using a hot pressing machine (available from Kodaira Seisakusho Co., Ltd.), the 100 µm film obtained as described above and plain weave fabric of recycled carbon fibers were laminated alternately in the order of the film, the woven fabric, and the film. Thereafter, the resultant was subjected to compression molding at a pressing machine temperature of 250°C, an applied pressure of 3 MPa, and a pressing time of 15 min, and thus a molded article was obtained.

### Measurement of Flexural Strength

The molded article obtained as described above was cut into a size appropriate for a standard by using a slide circular saw available from Makita Corporation. Using an Autograph (AG-Xplus 100kN, available from Shimadzu Corporation) as a tester, the three-point flexure was performed in accordance with ASTM D7264.

### Measurement of Interlaminar Shear Strength

The molded article obtained as described above was cut into a size appropriate for a standard by using a slide circular saw available from Makita Corporation. Using an Autograph (AG-Xplus 100kN, available from Shimadzu Corporation) as a tester, testing was performed in accordance with ASTM D2344.

**[Table 1]**

| | Example 1 | Example 2 | Comparative Example 1 | Comparative Example 2 |
|---|---|---|---|---|
| Type of reinforcing fibers (woven fabric) | CF | CF | CF | CF |
| Structure of woven fabric | Plain weave | Plain weave | Plain weave | Plain weave |
| Proportion of thermosetting resin in reinforcing fiber (mass%) | 12 | 8 | 0.5 | 38 |
| Resin film | MPXD10 | MPXD10 | MPXD10 | MPXD10 |
| Mass ratio of reinforcing fiber to film (reinforcing fiber:film) | 6:4 | 6:4 | 6:4 | 6:4 |
| Flexural strength (MPa) | 783 | 769 | 601 | 638 |
| Interlaminar shear strength (MPa) | 38 | 39 | 36 | 28 |

As is clear from the results described above, the composite material of the present invention had high interlaminar shear strength (interfacial shear strength) between the reinforcing fibers and the xylylenediamine-based polyamide resin, and the resulting molded article also had excellent flexural strength (mechanical strength) (Example 1 and Example 2).

Meanwhile, when the proportion of the thermosetting resin in the reinforcing fibers was small (Comparative Example 1), the reinforcing fibers were damaged, and the flexural strength (mechanical strength) of the resulting molded article was low.

On the other hand, when the proportion of the thermoplastic resin in the reinforcing fibers was large (Comparative Example 2), the reinforcing fiber inner part was not adequately impregnated with the xylylenediamine-based polyamide resin, the interlaminar shear strength (interfacial shear strength) between the reinforcing fibers and the xylylenediamine-based polyamide resin was low, and the flexural strength (mechanical strength) of the resulting molded article was low.

## Claims

1. A composite material comprising:
a xylylenediamine-based polyamide resin including a diamine structural unit and a dicarboxylic acid structural unit, 70 mol% or more of the diamine structural unit being derived from xylylenediamine; and
a reinforcing fiber including a thermosetting resin on a surface thereof,
wherein the reinforcing fiber includes the thermosetting resin in a proportion of more than 1.5 mass% and 30 mass% or less.

2. The composite material according to claim 1, wherein the reinforcing fiber is a recycled reinforcing fiber.

3. The composite material according to claim 1, wherein the reinforcing fiber is a recycled carbon fiber.

4. The composite material according to any one of claims 1 to 3, wherein 50 mol% or more of the dicarboxylic acid structural unit in the xylylenediamine-based polyamide resin is a structural unit derived from an α,ω-linear aliphatic dicarboxylic acid having from 4 to 20 carbon atoms.

5. The composite material according to any one of claims 1 to 4, wherein the reinforcing fiber is included in an amount of from 100 to 250 parts by mass with respect to 100 parts by mass of the xylylenediamine-based polyamide resin.

6. The composite material according to any one of claims 1 to 5, wherein the reinforcing fiber is a continuous reinforcing fiber.

7. The composite material according to any one of claims 1 to 6, wherein 90 mass% or more of a resin component included in the composite material is the xylylenediamine-based polyamide resin, and the thermosetting resin included in the reinforcing fiber.

8. The composite material according to any one of claims 1 to 7, wherein
the reinforcing fiber is a recycled carbon fiber,
50 mol% or more of the dicarboxylic acid structural unit in the xylylenediamine-based polyamide resin is a structural unit derived from an α,ω-linear aliphatic dicarboxylic acid having from 4 to 20 carbon atoms,
the reinforcing fiber is included in an amount of from 100 to 250 parts by mass with respect to 100 parts by mass of the xylylenediamine-based polyamide resin,
the reinforcing fiber is a continuous reinforcing fiber, and
90 mass% or more of a resin component included in the composite material is the xylylenediamine-based polyamide resin, and the thermosetting resin included in the reinforcing fiber.

9. The composite material according to any one of claims 1 to 8, wherein the reinforcing fiber is a woven fabric.

10. The composite material according to any one of claims 1 to 8, wherein the composite material is a pellet.

11. A molded article formed from the composite material described in any one of claims 1 to 10.
